# EUROPEAN PATENT APPLICATION

(11) **EP 3 677 648 A1**
(43) Date of publication of application: **08.07.2020**
(21) Application number: 19150162.6
(22) Date of filing: 03.01.2019
(51) Int. Cl.: C09D 5/00, C09D 5/22, G01N 3/56, C09D 163/00

(54) **PROCESS FOR DETECTING WEAR IN FLOOR COATING SYSTEMS AND COMPOSITIONS THEREOF**

(71) Applicant: SIKA TECHNOLOGY AG, 6340 Baar (CH)
(72) Inventor: Grötzinger, Jochen, 73525 Schwäbisch Gmünd (DE); Schneider, Horst, 74223 Flein (DE); Siegle, Claudia, 70825 Korntal (DE)
(74) Representative: Sika Patent Attorneys

(57) **Abstract**

The present invention relates to a process for detecting wear on a floor using a wear detection coating. The floor is exposed to light of a particular wavelength and the light as emitted by the floor is analyzed to detect the extent and location of the wear.

## Description

### Technical field

The present invention relates to a process for detecting wear in floor coatings and, more specifically, to the use of an optical brightener for detecting wear in floor coatings.

### Background

Floor coatings are subject to various types of stresses, which are caused by environmental impact, pollutants, harsh weather conditions, natural ageing and spillage of chemical and physical agents etc. These stresses create considerable wear and tear and may lead to chipping, marring, crocking, scratching, etching and staining of the surface of floor coating.

To ensure that coatings perform as intended, it is of utmost importance to inspect them regularly for wear detection. As suitable, maintenance strategies can be implemented only when knowledge pertinent to the extent of damage, site of damage, cause of damage and irregularity in the coating system is known. This information helps in taking appropriate wear control measures and devise repair methodologies in timely manner, which in turn leads to huge cost savings.

The flooring systems used in garages, workshops, factories, hospitals etc. are prone to fire and explosion, as the floors are subjected to lot of friction, which leads to accumulation of static electricity. Floor coatings provided on such surfaces play an important role in avoiding such hazards. Any minor wear especially pin hole, hairline cracks, erosion, reduction in thickness of coating layer, fine perforations (ex. micro cracks) etc. can lead to an accident, even if the floor coatings are not completely removed. By visual inspection such damage cannot be detected early enough if contacting layers of floor coatings are colorless or are of same color.

Therefore, to eliminate the risk of such untoward incidents, it is of great significance that appropriate wear control measures are taken in timely manner. Thus, early detection of wear on floor substrates is very critical for performing repair and refurbishment work.

The wear control of floor coatings is done by various techniques such as destructive layer thickness measurements, optical assessments, X-ray back scattering etc. However, all these techniques and methodologies have severe limitations with regards to ease of implementation and cost.

In case of multi-layered coatings the wear control/detection becomes even more difficult, as traditional means of identifying defects in floor coatings are relatively slow.

At present there are few, reliable, economic, easy-to-apply methods for controlling/detecting wear in floor coating systems. The present methods are associated with color issues and employ complex tools or techniques. It is highly desirable to devise a method for detecting wear in floor coatings, which is easy to implement and economically viable. Further, there is a need to provide coating compositions that can indicate when a coating is worn and no longer protecting the substrate.

### Summary of the invention

The present invention was made in a view to overcome the problems described above, and one of the objects of the present invention is to provide a process for detecting wear on a floor substrate containing a plurality of floor coatings. Another object of the present invention is to provide a wear detection coating composition.

The process of the present invention comprises the steps of applying a wear detection coating on floor substrate, particularly applied as one of at least a first layer of the plurality of floor coatings and a second layer of the plurality of floor coatings. Further, wear detecting coating comprises an optical brightener that absorbs radiant energy of wavelength centered around ultraviolet (UV) region, and emits radiant energy of a wavelength range centered around visible region of electromagnetic spectrum. In the present invention the first layer is the topmost layer of the plurality of floor coatings and the second layer of the plurality of floor coatings is adjacent to the first layer. The process also comprises the steps of scanning the plurality of floor coatings with radiant energy of wavelength centered around ultraviolet (UV) region. The process further comprises the steps of analyzing the radiant energy of a wavelength centered around visible region as emitted by the plurality of floor coatings.

In particular, the invention refers to the use optical brightener in a proportion of 0.1 to 0.5% by weight to the total weight of the wear detection coating. Particularly, the optical brightener is 2,5-Bis(benzoxazol-2-yl)thiophene.

Particularly, the first layer of the plurality of floor coating and the second layer of the plurality of floor coatings are of same color.

Particularly, the radiant energy absorbed by the plurality of floor coatings is generated from a UV lamp, more particularly at 254 nm.

Further, the radiant energy emitted by the wear detection coating is analyzed by using a detecting device.

Floor substrate of the present invention is selected from the group consisting of concrete, asphalt, cement, tile, grout, brick, ceramic, polymer composite, wood terrazzo, stone, vinyl composition flooring and combinations thereof.

Further, floor substrate is located in a structure selected from the group consisting of dwelling, garage, hospital, store, restaurant, school, office, and gymnasium.

The wear detection coating of the present invention, comprises of one or more polymer resin selected from the group consisting of an epoxy resin, a polyurethane resin and a polyurea resin, particularly an epoxy resin, more particularly a two-component epoxy resin composition.

Preferably, a two-component epoxy resin composition includes one epoxy resin and a hardener component which comprises at least one polyamine.

Preferably, two-component epoxy resin composition includes a liquid epoxy resin based on a bisphenol, particularly based on bisphenol A, bisphenol F or bisphenol A/F.

The invention refers to the use of one or more materials selected from the group consisting of wetting agent, dispersing agent, filler, defoamer, curing agent, emulsifier, pigment, levelling agent and quartz flour in the wear detection coating.

The invention also refers to the use of a silicone based defoamer, particularly a polysiloxane based defoamer.

### Brief Description of the Drawings

Fig. 1a illustrates a cross-sectional view of a coated floor substrate in accordance with an embodiment of the invention.
Fig. 1b illustrates a cross-sectional view of a coated floor substrate in accordance with an embodiment of the invention.
Fig. 2 depict photographic images of experimental plates, with the different concentrations of optical brightener, without black light.
Fig. 3 depict photographic images of experimental plates, with the different concentrations of optical brightener, viewed under black light lamp.
Fig. 5 is a method flow chart to illustrate the wear detection process for a floor substrate containing plurality of floor coatings according to an embodiment of the present disclosure.

### Detailed description of the Invention

For the purposes of the following detailed description, it is to be understood that the invention may assume various alternative variations and step sequences, except where expressly specified to the contrary.

In the context of the present invention, the following definitions may apply to the terms listed below, unless specified otherwise:
It must be noted that, as used in this specification and the appended claims, the singular forms "a," "an" and "the" include plural referents unless the content clearly dictates otherwise.

The term "wear" as used herein refers to old, damaged floor surface that requires refinishing. The term wear also includes abrasion damage, crocking, marring, gouging, scratching and defacement etc.

The term "Fluorescence" as used herein relates to the emission of light by a substance that has absorbed light or other electromagnetic radiation. Fluorescent activity is a short term or rapid emission response.

The term "Optical brighteners" as used herein refers to optical brightening agents (OBAs), fluorescent brightening agents (FBAs) or fluorescent whitening agents (FWAs). Typically these are dyes that absorb light in the UV and violet region (usually 200-400 nm) of the electromagnetic spectrum and re-emit light in the visible region (typically 400-700 nm).

A "Two component composition" refers to a curable composition in the present document, the components are present in two different components stored in separate containers and are storage stable in each case for itself. Only shortly before or during the application of the composition, the two or more components are mixed together, where upon the mixed composition cures, the curing in some cases only runs through the action of moisture or is completed.

A filler, as this term is used in the present application, is a material which is non-reactive towards other constituents. Typically, the term filler refers to any material, matter, component and/or composition which is added to thicken the coated or casted composition, support its structure and simply increase the volume of the composition and/or to lower the cost. Fillers are usually comprised of cheap and inert materials, such as one or more of talc, calcium carbonate, kaolin, lime, baryte, clay, etc.

The term "curing" as used herein refers to the composition that becomes harder or sets-in as a result of a chemical change/reaction.

The term "additive(s)" used herein is meant to comprise a component, agent, composition and the like usually added in smaller amounts (e.g. less than 0.5%, 0.04%, 0.2%, 1% or 0.8% of the total composition) and yet give a very significant effect on the product. Additives can comprise one or more of defoamer, wetting agents, levelling agent, and curing agent. Often, composition and/or coating composition comprises one or more additives.

The term "defoamer" or "anti-foaming agent" as used herein refers to a chemical additive that reduces and hinders the formation of foam in industrial process liquids.

The term "wetting agents" as used herein refers to substances that reduces the surface tension of water to allow it to spread drops onto a surface, increasing the spreading abilities of a liquid.

The term "levelling agent" as used herein refers to a chemical substance which is added to a coating to enhance its thickness uniformity and is excellent for smoothing and flattening interior surfaces.

"Diluent" is a substance used to dilute and to reduce the viscosity of the composition.

An "emulsifier" or "emulsifying agent" is a compound or substance at acts as a stabilizer for immiscible liquids by increasing the kinetic stability of the mixture.

In accordance with the general principles of the present invention, an optical brightener is added to a wear detection coating and the level of fluorescence of the applied wear detection coating is observed by exposure to UV light.

The present invention relates in a first aspect relates to a process for detecting wear on a floor substrate, the floor substrate including a plurality of floor coatings, the process comprising:
- applying a wear detection coating as one of at least a first layer of the plurality of floor coatings and a second layer of the plurality of floor coatings, wherein the wear detection coating comprises an optical brightener that absorbs radiant energy of wavelength centered around ultraviolet (UV) region, preferably between 400 and 200 nm, more preferably 400 and 240 nm, 400 and 300 nm, 390 and 320 nm, more preferably 390 and 320 nm, and emits radiant energy of wavelength centered around visible region, preferably between 400 and 550 nm, more preferably 400 and 500 nm, 410 and 480 nm, more preferably 420 and 450 nm, and wherein the first layer is the topmost layer of the plurality of floor coatings and the second layer is adjacent to the first layer;
- scanning the plurality of floor coatings with radiant energy of wavelength centered around ultraviolet (UV) region, preferably between 400 and 200 nm, more preferably 390 and 240 nm; and
- analyzing radiant energy of wavelength centered around visible region, preferably between 400 and 550 nm, more preferably 410 and 480 nm, as emitted by the plurality of floor coatings.

The process for detecting wear on a floor substrate including a plurality of floor coatings involves the steps of applying a wear detection coating as a first layer of the plurality of floor coatings or as a second layer of the plurality of floor coatings. The wear detection coating comprises an optical brightener that absorbs radiant energy of wavelength centered around ultraviolet (UV) region and emits radiant energy of wavelength centered around visible region. The first layer is the topmost layer of the plurality of floor coatings and the second layer is adjacent to the first layer. In another step of the wear detection process of the present invention, the plurality of floor coatings are scanned with radiant energy of wavelength centered around ultraviolet (UV) region. In yet another step of the wear detection process of the present invention, radiant energy of a wavelengthcentered around visible region as emitted by the plurality of floor coatings is analyzed.

Preferably, each of the first layer of the plurality of floor coatings and the second layer of the plurality of floor coatings is of same color.

The defects or wear present in the floor substrate containing the plurality of floor coatings can be detected on visual inspection of the floor coatings. The present invention provides a convenient process for early detection of wear in order to allow adequate planning for wear repair (e.g. wear after repeated cleaning)

The wear detection coating of the present invention is adapted to form a layer of the plurality floor coatings of the present invention.

Preferably, the wear detection coating comprises one or more polymer resin selected from the group consisting of an epoxy resin, a polyurethane resin and a polyurea resin.

More preferably, the wear detection coating is based on an epoxy resin, particularly a two-component epoxy resin composition.

Preferably, the epoxy resin is a liquid resin based on a bisphenol, particularly based on bisphenol A, bisphenol F or bisphenol A/F.

Preferably, the two-component epoxy resin composition includes a liquid epoxy resin.

Preferably, the two-component epoxy resin composition includes an epoxy curing agent.

Preferably, the wear detection coating comprises one or more materials selected from the group consisting of wetting agent, dispersing agent, filler, defoamer, curing agent, emulsifier, pigment, levelling agent and quartz flour

In the following section, the components of the wear detection coating, used according to the invention, are explained in detail:

### Polymer Resin

A range of synthetic polymeric materials can be used for preparing the wear detection coating of the present invention. Suitable homopolymeric and copolymer materials which may be adapted for use in this invention are selected from the group consisting of an epoxy resin, a polyurethane resin, a polyurea resin and mixtures thereof.

Preferably, the plurality of floor coatings used in the present invention are similar to the wear detection coating. The main difference lies in the presence of the optical brightener, as the optical brightener is present in the wear detection coating only. The plurality of floor coatings are based on one or more polymers selected from the group consisting of epoxy, polyurethane, polyurea and mixtures thereof. Preferably, the plurality of floor coatings are based on epoxy resin. More preferably, the plurality of floor coatings are based on a two component epoxy resin composition.

The two component epoxy resin usually consists of a resin component **K1** which comprises an epoxy resin, and of a hardener component **K2** which comprises compounds that are reactive with epoxy groups, usually primarily polyamines. The two components are mixed for use, and they cure at ambient temperature.

Suitable epoxy resins are the epoxy resins conventionally used in epoxy chemistry. They are obtained in the known manner, for example, from the oxidation of the corresponding olefins or from the reaction of epichlorohydrin with the corresponding polyols, polyphenols or amines.

So-called polyepoxy liquid resins, hereafter referred to as "liquid resin," are particularly suitable as epoxy resin. They have a glass transition temperature that is usually less than 25 °C, in contrast to the so-called solid resins which have a glass transition temperature above 25 °C, and which can be comminuted at 25 °C to pourable powders.

In an embodiment, the liquid resin is an aromatic polyepoxy. For this purpose, suitable liquid resins have the formula (I) 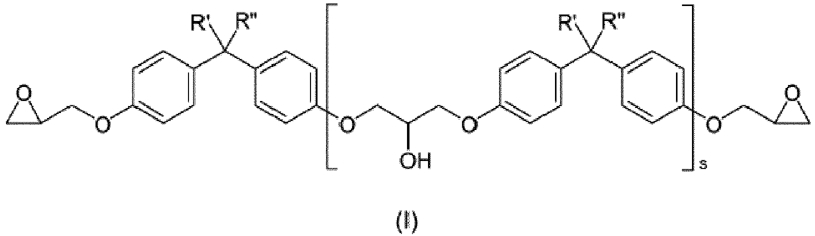 where R' and R", independently of each other, in each case stand for a hydrogen atom or for a methyl group, and s on average stands for a value from 0 to 1. Preferred liquid resins of formula (I) are those in which the index s on average has a value of less than 0.2.

The liquid resins of formula (I) are diglycidyl ethers of bisphenol A, bisphenol F and bisphenol A/F, where A stands for acetone and F for formaldehyde, which are used as educts for the preparation of these bisphenols. A bisphenol A liquid resin accordingly comprises methyl groups, a bisphenol F liquid resin comprises hydrogen atoms, and a bisphenol A/F liquid resin comprises both methyl groups and also hydrocarbon atoms as R' and R" in formula (I). In the case of bisphenol F, positional isomers can also be present, particularly those derived from 2,4'- and 2,2'-hydroxyphenylmethane.

Additional suitable aromatic liquid resins are the glycidylization products of
- dihydroxybenzene derivatives, such as, resorcinol, hydroquinone and catechol;
- additional bisphenols or polyphenols, such as, bis-(4-hydroxy-3-methylphenyl)-methane, 2,2-bis-(4-hydroxy-3-methylyphenyl)-propane (bisphenol C), bis-(3,5-dimethyl-4-hydroxyphenyl)-methane, 2,2-bis-(3,5-dimethyl-4-hydroxyphenyl)-propane, 2,2-bis-(3,5-dibromo-4-hydroxyphenyl)-propane, 2,2-bis-(4-hydroxy-3-tert.-butylphenyl)-propane, 2,2-bis-(4-hydroxyphenyl)-butane (bisphenol B), 3,3-bis-(4-hydroxyphenyl)-pentane, 3,4-bis-(4-hydroxyphenyl)-hexane, 4,4-bis-(4-hydroxyphenyl)-heptane, 2,4-bis-(4-hydroxyphenyl)-2-methylbutane, 2,4-bis-(3,5-dimethyl-4-hydroxyphenyl)-2-methylbutane, 1,1-bis-(4-hydroxyphenyl)-cyclohexane (bisphenol Z), 1,1-bis-(4-hydroxyphenyl)-3,3,5-trimethylcyclohexane (bisphenol TMC), 1,1-bis-(4-hydroxyphenyl)-1-phenylethane, 1,4-bis[2-(4-hydroxyphenyl)-2-propyl]-benzene) (bisphenol P), 1,3-bis-[2-(4-hydroxyphenyl)-2-propyl]-benzene) (bisphenol M), 4,4'-dihydroxydiphenyl (DOD), 4,4'-dihydroxybenzophenone, bis-(2-hydroxynaphth-1-yl)-methane, bis-(4-hydroxynaphth-1-yl)-methane 1,5-dihydroxy-naphthalene, tris-(4-hydroxyphenyl)-methane, 1,1,2,2-tetrakis-(4-hydroxyphenyl)-ethane bis-(4-hydroxyphenyl)-ether, bis-(4-hydroxyphenyl)sulfone;
- condensation products of phenols with formaldehyde, which are obtained under acidic conditions, such as, phenol novolaquers or cresol novolacquers, also referred to as bisphenol F novolacquers;
- aromatic amines, such as, aniline, toluidine, 4-aminophenol, 4,4'-methylenediphenyldiamine (MDA), 4,4'-methylenediphenyldi(N-methyl)-amine, 4,4'-[1,4-phenylene-bis-(1-methylethylidene)]-bisaniline (bisaniline P), and 4,4'-[1,3-phenylene-bis-(1-methylethylidene)]-bisaniline (bisaniline M).

Also suitable, as epoxy resin, is an aliphatic or cycloaliphatic polyepoxy, such as, for example
- a glycidyl ether of a saturated or unsaturated, branched or unbranched, cyclic or open-chained C₂-C₃₀ diol, such as, for example, ethylene glycol, propylene glycol, butylene glycol, hexanediol, octanediol, a polypropylene glycol, dimethylolcyclohexane, neopentyl glycol or dibromoneopentyl glycol;
- a glycidyl ether of a tri- or tetrafunctional, saturated or unsaturated, branched or unbranched, cyclic or open-chained polyol, such as, castor bean oil, trimethylolpropane, trimethylolethane, pentaerythrol, sorbitol or glycerol, as well as alkoxylated glycerol or alkoxylated trimethylolpropane;
- a hydrated bisphenol A, F or A/F liquid resin, or the glycidylization products of hydrated bisphenol A, F or A/F; and
- an N-glycidyl derivative of amides or heterocyclic nitrogen bases, such as, triglycidyl cyanurate and triglycidyl isocyanurate, as well as reaction products of epichlorohydrin and hydantoin.

Additional possible epoxy resins are bisphenol A, F or A/F solid resin whose structure is similar to that of the already mentioned liquid resins of formula (I), except that the index s has a value of 2-12, and the glass transition temperature is higher than 25 °C.

Finally, as epoxy resin, it is also suitable to use epoxy resins from the oxidation of olefins, for example, from the oxidation of vinylcylohexene, dicyclopentadiene, cyclohexadiene, cyclododecadiene, cyclododecatriene, isoprene, 1,5-hexadiene, butadiene, polybutadiene or divinylbenzene.

As epoxy resin, it is preferable to use liquid resins based on a bisphenol, particularly based on bisphenol A, bisphenol F or bisphenol A/F, which are commercially available, for example, from Dow, Huntsman, and Hexion, wherein said liquid resins are optionally present in combination with bisphenol A solid resin or bisphenol F novolacquer epoxy resin.

### Epoxy Curing agent/Hardener

Preferably, the two-component epoxy resin composition includes an epoxy curing agent.

The hardener component **K2** of the two-component epoxy resin composition comprises at least one polyamine **A1** having at least one primary amino group.

The following polyamines are particularly suitable as polyamine A1:
- aliphatic, cycloaliphatic or arylaliphatic primary diamines, for example, ethylenediamine, 1,2-propanediamine, 1,3-propanediamine, 2-methyl-1,2-propanediamine, 2,2-dimethyl-1,3-propanediamine, 1,3-butanediamine, 1,4-butanediamine, 1,3-pentanediamine (DAMP), 1,5-pentanediamine, 1,5-diamino-2-methylpentane (MPMD), 2-butyl-2-ethyl-1,5-pentanediamine (C11-neodiamine), 1,6-hexanediamine, 2,5-dimethyl-1,6-hexanediamine, 2,2,4- and 2,4,4-trimethylhexamethylenediamine (TMD), 1,7-heptanediamine, 1,8-octanediamine, 1,9-nonanediamine, 1,10-decanediamine, 1,11-undecanediamine, 1,12-dodecanediamine, 1,2-, 1,3- and 1,4-diaminocyclohexane, bis-(4-aminocyclohexyl)-methane (H12-MDA), bis-(4-amino-3-methylcyclohexyl)-methane, bis-(4-amino-3-ethylcyclohexyl)-methane, bis-(4-amino-3,5-dimethylcyclohexyl)-methane, bis-(4-amino-3-ethyl-5-methylcyclohexyl)-methane (M-MECA), 1-amino-3-aminomethyl-3,5,5-trimethylcyclohexane (= isophoronediamine or IPDA), 2- and 4-methyl-1,3-diaminocyclohexane and mixtures thereof, 1,3- and 1,4-bis-(aminomethyl)cyclohexane, 2,5(2,6)-bis-(aminomethyl)-bicyclo[2.2.1]heptane (NBDA), 3(4),8(9)-bis-(aminomethyl)-tricyclo[5.2.1.02,6]decane, 1,4-diamino-2,2,6-trimethylcyclohexane (TMCDA), 1,8-menthanediamine, 3,9-bis-(3-aminopropyl)-2,4,8,10-tetraoxaspiro[5.5]undecane as well as 1,3- and 1,4-xylylenediamine;
- ether group-containing aliphatic primary diamines, for example, bis-(2-aminoethyl)ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine and higher oligomers of said diamines, bis-(3-aminopropyl)polytetrahydrofurans and other polytetrahydrofuran-diamines with molecular weights in the range of, for example, 350-2000, as well as polyoxyalkylenediamines. The latter typically represent products from the amination of polyoxyalkylenediols, and they are available, for example, under the name Jeffamine® (from Huntsman), under the name polyetheramine (from BASF) or under the name PC Amine® (from Nitroil). Particularly suitable polyoxyalkylenediamines are Jeffamine® D-230, Jeffamine® D-400, Jeffamine® D-2000, Jeffamine® XTJ-511, Jeffamine® ED-600, Jeffamine® ED-900, Jeffamine® ED-2003, Jeffamine® XTJ-568, Jeffamine® XTJ-569, Jeffamine® XTJ-523, Jeffamine® XTJ-536, Jeffamine® XTJ-542, Jeffamine® XTJ-559, Jeffamine® EDR-104, Jeffamine® EDR-148, Jeffamine® EDR-176; Polyetheramine D 230, Polyetheramine D 400 and Polyetheramine D 2000, PC Amine® DA 250, PC Amine® DA 400, PC Amine® DA 650 and PC Amine® DA 2000;
- aliphatic, cycloaliphatic or arylaliphatic primary triamines, such as, 4-aminomethyl-1,8-octanediamine, 1,3,5-tris-(aminomethyl)-benzene, 1,3,5-tris-(aminomethyl)-cyclohexane, tris-(2-aminoethyl)-amine, tris-(2-aminopropyl)-amine, and tris-(3-aminopropyl)-amine;
- primary polyoxyalkylene-triamines, which typically are products from the amination of polyoxyalkylenetriols, and are available, for example, under the commercial name Jeffamine® (from Huntsman), under the name polyetheramine (from BASF) or under the name PC Amine® (from Nitroil), such as, for example, Jeffamine® T-403, Jeffamine® T-3000, polyetheramine T403 and PC Amine® TA 403;
- tertiary amino group-comprising polyamines, such as, for example, N,N'-bis-(aminopropyl)-piperazine, N,N-bis-(3-aminopropyl)methylamine, N,N-bis-(3-aminopropyl)ethylamine, N,N-bis-(3-aminopropyl)propylamine, N,N-bis-(3-aminopropyl)cyclohexylamine, N,N-bis-(3-aminopropyl)-2-ethylhexylamine, as well as the products of the double cyanoethylation and subsequent reduction of fatty amines which are derived from natural fatty acids, such as, N,N-bis-(3-aminopropyl)-dodecylamine and N,N-bis-(3-aminopropyl)-talc alkylamine, available as Triameen® Y12D and Triameen® YT (from Akzo Nobel);
- secondary amino group-comprising polyamines, such as, for example, diethylenetriamine (DETA), dipropylenetriamine (DPTA), bishexamethylenetriamine (BHMT), 3-(2-aminoethyl)aminopropylamine, N3-(3-aminopentyl)-1,3-pentanediamine, N5-(3-aminopropyl)-2-methyl-1,5-pentanediamine, N5-(3-amino-1-ethylpropyl)-2-methyl-1,5-pentanediamine, N,N'-dibutylethylenediamine; N,N'-di-tert-butyl-ethylenediamine, N,N'-diethyl-1,6-hexanediamine, 1-(1-methylethyl-amino)-3-(1-methylethyl-aminomethyl)-3,5,5-trimethylcyclohexane (Jefflink® 754 from Huntsman), N4-cyclohexyl-2-methyl-N2-(2-methylpropyl)-2,4-pentanediamine, N,N'-dialkyl-1,3-xylylenediamine, bis-(4-(N-alkylamino)-cyclohexyl)-methane, 4,4'-trimethylene-dipiperidine, N-alkylated polyether amines, for example, the Jeffamine® types SD-231, SD-401, SD-404 and SD-2001 (from Huntsman);
- amine/polyepoxy adducts, particularly adducts from the mentioned polyamines with diepoxies in the molar ratio of at least 2/1, particularly in the molar ratio from 2/1 to 6/1;
- as well as polyamidoamines which are reaction products from a monovalent or polyvalent carboxylic acid, or its esters or anhydrides, particularly a dimer fatty acid, and an aliphatic, cycloaliphatic or aromatic polyamine used in stoichiometric excess, particularly a polyalkyleneamine, such as, for example, DETA or triethylenetetramine (TETA), particularly the commercially available polyamidoamines Versamid® 100, 125, 140 and 150 (from Cognis), Aradur® 223, 250 and 848 (from Huntsman), Euretek® 3607, Euretek® 530 (from Huntsman), Beckopox® EH 651, EH 654, EH 655, EH 661 and EH 663 (from Cytec);
- polyamines **A2** having at least one primary and at least two secondary amino groups.

As polyamine **A2,** the following are particularly suitable:
- aliphatic polyamines comprising two primary and at least two secondary amino groups, for example, so-called polyalkyleneamines, such as, triethylenetetramine (TETA), tetraethylenepentamine (TEPA), pentaethylenehexamine (PEHA), polyethylenepolyamine having 5-7 ethyleneamine units (the so-called "higher ethylenepolyamine," HEPA) and N,N'-bis(3-aminopropyl)ethylenediamine. Such polyalkyleneamines are prepared, for example, from 1,2-dichloroethane and ammonia, or by cyanoethylation or cyanobutylation followed by hydration of primary polyamines;
- so-called polyethyleneimines (PEI); they are branched polymer amines from the polymerization of ethyleneimine. An appropriate polyethyleneimine typically has an average molecular weight in the range of 250-25,000 g/mol, and it comprises tertiary, secondary and primary amino groups. Polyethyleneimines are available, for example, under the trade names Lupasol® (from BASF), for example the types Lupasol® FG, Lupasol® G20 and Lupasol® PR 8515;
- amine/polyepoxy adducts which comprise at least one primary and at least two secondary amino groups, particularly the adducts of polyalkyleneamines with diepoxies in the molar ratio of at least 2/1, particularly in the molar ratio from 2/1 to 6/1, wherein the following are particularly suitable as polyalkyleneamine: DETA, DPTA, BHMT, 3-(2-aminoethyl)aminopropylamine, N3-(3-aminopentyl)-1,3-pentanediamine, N5-(3-aminopropyl)-2-methyl-1,5-pentanediamine, N5-(3-amino-1-ethylpropyl)-2-methyl-1,5-pentanediamine, TETA, TEPA, PEHA, HEPA and N,N'-bis(3-aminopropyl)ethylenediamine;
- polyamidoamines which comprise at least one primary and at least two secondary amino groups, such as, for example, the reaction product of a monovalent or polyvalent carboxylic acid, or its esters or anhydrides, and a polyalkyleneamine, such as, for example, DETA or TETA.

As polyamine **A1,** the polyamines **A2** are preferred as well as 1,5-diamino-2-methylpentane (MPMD), 2-butyl-2-ethyl-1,5-pentanediamine (C11-neodiamine), 2,2,4- and 2,4,4-trimethylhexamethylenediamine (TMD), bis-(4-amino-3-methylcyclohexyl)-methane, 1-amino-3-aminomethyl-3,5,5-trimethylcyclohexane (= isophoronediamine or IPDA), 1,3-bis-(aminomethyl)cyclohexane, 3(4),8(9)-bis-(aminomethyl)-tricyclo[5.2.1.0^{2,6}]decane, 1,3-xylylenediamine, and ether group-containing di- and triamines from the amination of polyoxyalkylene diolenes and triolenes having a molecular weight of 500 g/mol, particularly the commercial types Jeffamine® D-230, Jeffamine® D-400 and Jeffamine® T-403 (from Huntsman).

A particularly preferred polyamine **A1** is a polyamine **A2** having at least one primary and at least two secondary amino groups.

The polyamine **A2** is preferably selected from the group consisting of TETA, TEPA, PEHA, HEPA, N,N'-bis(3-aminopropyl)ethylenediamine; adducts of DETA, DPTA, BHMT, TETA, TEPA, PEHA, HEPA or N,N'-bis(3-aminopropyl)ethylenediamine with a diglycidyl ether, particularly diglycidyl ether of bisphenol A, bisphenol F, bisphenol A/F, ethylene glycol, propylene glycol, butylene glycol, hexanediol, octanediol or a polypropylene glycol; and polyamidoamines.

Also suitable as polyamine **A1** are mixtures of different polyamines, particularly mixtures of at least one polyamine **A2** and at least one additional polyamine having at least one primary amino group.

Both the resin component **K1** and also the hardener component **K2** can contain additional auxiliary products and additives, such as, for example:
- solvents, film forming agents or extenders, such as, toluene, xylene, methyl ethyl ketone, 2-ethoxy ethanol, 2-ethoxy-ethylacetate, benzyl alcohol, ethylene glycol, diethylene glycol butyl ether, dipropylene glycol butyl ether, ethylene glycol butyl ether, ethylene glycol phenyl ether, N-methylpyrrolidone, propylene glycol butyl ether, propylene glycol phenyl ether, diphenylmethane, diisopropylnaphthalene, mineral oil fractions, such as, for example, Solvesso types (from Exxon), aromatic hydrocarbon resins, particularly phenol group-containing types, sebacates, phthalates, organic phosphoric and sulfonic acid esters and sulfonamides;
- reactive diluents, for example, epoxy reactive diluents, as already mentioned above, epoxidized soybean oil or linseed oil, acetoacetate group-comprising compounds, particularly acetoacetylated polyols, butyrolactone, as well as furthermore isocyanates, and reactive group-comprising silicones;
- inorganic and organic fillers, for example, ground or precipitated calcium carbonates coated optionally with fatty acids, particularly stearates; barite (heavy spar), talcs, quartz flours, quartz sand, dolomites, wollastonites, kaolins, mica (potassium-aluminum silicate), molecular sieves, aluminum oxides, aluminum hydroxides, silicic acids, cements, gypsums, flue ashes, carbon black, graphite, metal powders, such as, aluminum, copper, iron, silver or steel, PVC powder or hollow beads;
- fibers, for example, made of plastic or glass;
- pigments, for example, titanium dioxide and iron oxides;
- accelerators which accelerate the reaction between amino groups and epoxy groups, for example, acids or compounds that can be hydrolyzed to acids, for example, organic carboxylic acids, such as, acetic acid, benzoic acid, salicylic acid, 2-nitrobenzoic acid, lactic acid, organic sulfonic acids, such as, methanesulfonic acid, p-toluenesulfonic acid or 4-dodecylbenzenesulfonic acid, sulfonic acid esters, other organic or inorganic acids, such as, for example, phosphoric acids, or mixtures of the above-mentioned acids and acid esters; moreover tertiary amines, such as, 1,4-diazabicyclo[2.2.2]octane, benzyldimethylamine, α-methylbenzyldimethylamine, triethanolamine, dimethylaminopropylamine, salts of such tertiary amines, quaternary ammonium salts, such as, for example, benzyltrimethylammonium chloride, phenols, particularly bisphenols, phenol resins, and Mannich bases, such as, for example, 2-(dimethylaminomethyl)-phenol and 2,4,6-tris-(dimethylaminomethyl)-phenol, phosphites, such as, for example, di- and triphenyl phosphites, as well as mercapto group-comprising compounds, as already mentioned above;
- rheology modifying agents, such as, particularly, thickeners, for example, layer silicates, such as, bentonites, derivatives of castor bean oil, hydrated castor bean oil, polyamides, polyurethanes, urea compounds, pyrogenic silicic acids, cellulose ethers, and hydrophobically modified polyoxyethylenes;
- bonding enhancers, for example, organoalkoxysilanes, such as, 3-glycidoxypropyltrimethoxysilane, 3-aminopropyltrimethoxysilane, N-(2-aminoethyl)-3-aminopropyltrimethoxysilane, N-(2-aminoethyl)-N'-[3-(trimethoxysilyl)propyl]ethylenediamine, 3-ureidopropyltrimethoxysilane, 3-chloropropyltrimethoxysilane, vinyltrimethoxysilanes, or the corresponding organosilanes with ethoxy groups instead of the methoxy groups;
- stabilizers against oxidation, heat, light and UV radiation;
- flame retardant substances, particularly compounds such as aluminum hydroxide (Al(OH)₃; also referred to as ATH for "aluminum trihydrate"), magnesium hydroxide (Mg(OH)₂; also referred to as MDH for "magnesium dihydrate"), ammonium sulfate ((NH₄)₂SO₄), boric acid (B(OH)₃), zinc borate, melamine borate, and melamine cyanurate;
- surfactants such as, for example, crosslinking agents, levelling agents, aeration agents or defoaming agents;
- biocides, such as, for example, algicides, fungicides or fungal growth-inhibiting substances.

The two-component epoxy resin composition preferably comprises additional auxiliary products and additives, particularly crosslinking agents, diluents, defoaming agents, stabilizers, pigments and accelerators, particularly, salicylic acid or 2,4,6-tris-(dimethylaminomethyl)phenol.

The two-component epoxy resin composition preferably comprises less than 10 wt%, preferably less than 5 wt%, benzyl alcohol. In particular, the two-component epoxy resin composition is free of benzyl alcohol.

The resin component **K1** and the hardener component **K2** can each be stored in a suitable packaging or arrangement, such as, for example, a drum, a hobbock, a pouch, a bucket, a can, a cartridge, or a tube, before their use, for several months up to a year and longer, without their respective properties changing to an extent of relevance for their use.

To use the two-component epoxy resin composition, the resin component **K1** and the hardener component **K2** are mixed with each other. The mixing ratio between the resin component **K1** and the hardener component **K2** is preferably selected in such a manner that the groups that are reactive with respect to epoxy groups, in the hardener component **K2,** are in a suitable ratio to the epoxy groups in the resin component **K1**.

The ratio of the number of groups that are reactive with respect to epoxy groups, in the hardener component **K2,** to the number of epoxy groups in the resin component **K1** is appropriately in the range from 0.5 to 1.5, particularly 0.8 to 1.2, wherein as many primary amino groups are not counted as groups that are reactive with respect to epoxy groups as there are aldehyde groups present in the resin component **K1**.

It is known to the person skilled in the art that primary amino groups with respect to epoxy groups are bifunctional, and that a primary amino group is thus counted as two groups that are reactive with respect to epoxy groups.

In parts by weight, the mixing ratio between the resin component **K1** and the hardener component **K2** is usually in the range from 1:10 to 10:1.

The mixing of the two components occurs by means of an appropriate method; it can be carried out continuously or in batch mode. If the mixing occurs prior to the use, one must make sure that not too much time passes between the mixing of the components and the application, because this could lead to disturbances, such as, for example, a slowed or incomplete development of the adhesion to the substrate. The mixing is carried out particularly at ambient temperature, which is typically in the range from approximately 5 to 50 °C, preferably approximately 10-30 °C.

The curing of the described epoxy resin composition by chemical reaction starts with the mixing of the two components.

The curing occurs particularly at ambient temperature, which is typically in the range from approximately 5 to 50 °C, preferably approximately 10-30 °C.

The curing typically takes several days to weeks, until it is substantially completed under the given conditions. The duration depends on the temperature, the reactivity of the components and their stoichiometry, and on the presence of accelerators, among other factors.

If needed, the floor substrates can be subjected to a preliminary treatment before the application of the epoxy resin composition. Such preliminary treatments comprise in particular physical and/or chemical cleaning processes, for example, polishing, sandblasting, shot blasting, brushing or the like, wherein dust produced in the process are advantageously removed by suctioning, and also a treatment with cleaners or solvents, or the application of an adhesion promoting agent, an adhesion promoting agent solution, or a primer.

### Optical Brightener

The wear detection coating, used in the process for detecting wear on a floor substrate including plurality of floor coatings, contains at least one optical brightener.

The optical brightener suitable for use in the present invention absorbs the invisible ultraviolet portion of the daylight spectrum between 300 and 400 nanometers, preferably 320 and 390 nanometers, more preferably 350 and 390 nanometers, and emits this energy as visible radiation in the longer wavelength portion of the spectrum, between 400 and 500 nanometers, preferably 410 and 480 nanometers, more preferably 420 and 450 nanometer.

Preferably, the optical brightener is added in a proportion of 0.05 to 1.0 % by weight, 0.1 to 0.5% by weight, preferably 0.2 to 0.5% by weight, especially preferred 0.2 to 0.4% by weight, of the total weight of the wear detection coating.

Preferably, the optical brightener is selected from the list consisting of 1,3,5-triazinyl derivatives of 4,4'-diamino-2,2'-stilbenedisulfonic acid (flavonic acid), 4,4'-distyrylbiphenyls, Hymecromon (methylumbelliferone), coumarin, dihydroquinolinone, 1,3-diarylpyrazoline, naphthalene -1,8-dicarboximide; benzoxazole-based systems, benzisoxazole-based systems, benzimidazole-based systems and heterocyclic-substituted pyrene derivatives, preferably benzoxazole-based systems.

More preferably, the optical brightener is a benzoxazole-based system, especially 4,4'-(*E*)-bis(benzoxazolyl)stilbene or a derivative thereof or a 2,5-bis(benzoxazol-2-yl)thiophene or a derivative thereof, preferably 2,5-bis(benzoxazol-2-yl)thiophene or a derivative thereof.

Most preferably, the optical brightener is 2,5-Bis(benzoxazol-2-yl)thiophene.

Example of a suitable optical brightener, which can be used in accordance with the present invention, is dispersion Uvitex EBF 250% as sold by the Ciba-Geigy Chemical Company.

The optical brightener selected for the wear detection coating must be compatible with the polymer system utilized in floor coatings.

### Diluent

The polymer resin used in the wear detection coating of the present invention further comprises one or more reactive diluents. The addition of a reactive diluent to the polymer resin has the effect of reducing the viscosity, and also, in the cured state of the floor coatings by reducing the glass transition temperature and the mechanical values.

Suitable as epoxy reactive diluents are low-viscosity mono- and polyepoxies, such as, for example, the glycidyl ethers of monovalent or polyvalent phenols, and aliphatic or cycloaliphatic phenols, such as particularly the already mentioned polyglycidyl ethers of di- or polyols, as well as moreover particularly phenyl glycidyl ether, cresyl glycidyl ether, p-n-butylphenyl glycidyl ether, p-tert-butylphenyl glycidyl ether, nonylphenyl glycidyl ether, allyl glycidyl ether, butyl glycidyl ether, hexyl glycidyl ether, 2-ethylhexyl glycidyl ether, as well as glycidyl ethers of natural alcohols, such as, for example, C₈-C₁₀ alkyl glycidyl ethers or C₁₂-C₁₄ alkyl glycidyl ethers, available commercially as Erisys® GE-7, Erisys® GE-8 (from CVC), or as Epilox® P 13 - 19 (from Leuna).

### Wetting and Dispersing Agent

In an embodiment of the invention, the wear detection coating of the present invention comprises one or more wetting and dispersing agents. The wetting and dispersing agents can be adsorbed on the molecular chain of the epoxy reaction system to form a bilayer structure. This in turn helps to improve the wetting property of the epoxy system, improve the uniformity of the epoxy system during curing, and materialize the entire epoxy system.

Preferably, the wetting agent is a polyether modified silicone-based wetting agent. It can effectively reduce the interfacial tension between substances, can significantly improve the flow characteristics of the interface to produce a smooth, flat appearance.

Suitable examples of the wetting and dispersing agents which can be used in the present invention are EFKA-5056 (Evka Company of the Netherlands), BYK®-9076 (BYK Company of Germany), BYK®-9077, DISPERBYK®-180, DISPERBYK®-2155, BYK163, TEGO® Wet KL 245 (Evonik Industries AG ,Essen, Germany) and BYK®-346 etc.

### Leveling Agents

In an embodiment of the invention, the wear detection coating of the present invention comprises one or more levelling agents. The levelling agent is generally added to a coating to enhance its thickness uniformity and is excellent for smoothing and flattening of surfaces.

Suitable examples of the leveling agents which can be used in the present invention are Efka® 3030 (BASF SE is a German chemical company), Efka® FL 3777, Efka® FL 3772 , BYK®-405 (BYK Additives & Instruments Wesel, Germany), BYK®-411 and BYK®-410, or the above components are mixed in any ratio.

The leveling agent commonly used in the art is fluorocarbon-based leveling agent (fluorocarbon-modified polymer solution); as may be selected Efka Dutch Company EFKA3777.

### Fillers

The wear detection coating of the present invention further comprises one or more fillers. Inorganic and organic fillers, such as ground or precipitated calcium carbonates, barite, talcs, finely ground quartzes, silica sand, dolomites, wollastonites, kaolins, micas, aluminum oxides, aluminum hydroxides, silicas, PVC powders, or hollow beads.

### Emulsifier

In an embodiment of the invention, the wear detection coating of the present invention comprises at least one emulsifier. Preferably, the wear detection coating comprises a non-ionic emulsifier. The non-ionic emulsifier is selected from the group consisting of an alkyl or alkylaryl polyglycol ether, such as a polyalkoxylated alkylphenol such as alkylphenoxypoly(ethyleneoxy)ethanol, an example being a polyadduct of nonylphenol and ethylene oxide containing up to 30 mol of ethylene oxide per mole of nonylphenol or, preferably, an alkoxylated fatty alcohol, an example being an ethoxylated fatty alcohol.

An emulsifiable epoxy resin preferably comprises at least one emulsifier, as already mentioned above as a constituent of an epoxy resin dispersion. Suitable examples of the emulsifiable epoxy resins are, for example, Araldite® PY 340 and Araldite® PY 340-2 (from Huntsman), Beckopox® 122w and Beckopox® EP 147w (from Cytec).

### Defoamer

In an embodiment of the invention, the wear detection coating of the present invention comprises at least one defoamer.

Preferably, the wear detection coating comprises a silicone based defoamer, particularly a polysiloxane based defoamer.

Preferably, the wear detection coating comprises a modified polydimethylsiloxane based defoamer. More preferably, the wear detection coating comprises polyether modified polysiloxane based defoamer.

Suitable examples of the defoamers are Tego FOAMEX 805 (Evonik Industries AG, Essen, Germany), BYK-Chemie BYK® -022, BYK-Chemie BYK-024, DEE FO® 725E (Munzing Chemie Gmbh, Germany), Byk-019®, EFKA®-2550 (BASF), BYK-022(German company BYK), BYK® -320, BYK®-066, Efka® 2550 (BASF) and Efka® SI 2722 (BASF).

### Pigment

In an embodiment of the invention, the wear detection coating of the invention comprises at least one pigment.

The pigment or mixtures of pigments may be used as such in solid form, as powder or muller pigment, or as a customary pigment preparation, in the form of a pigment paste, for example. Suitable pigments are all commercially available pigments or pigment preparations.

The pigments may be inorganic or organic pigments. Examples of inorganic pigments are titanium dioxide, carbon black, bismuth pigments, iron oxide pigments, chromium oxides, mixed phase oxide pigments, Prussian Blue, ultramarine, cobalt pigments, and chromate pigments. Examples of organic pigments are azo pigments and polycyclic pigments such as copper phthalocyanine, quinacridone, diketopyrrolopyrrole, perylene, isoindoline, dioxazine and indanthrone pigments.

Preferably, the wear detection coating comprises titanium dioxide.

### Floor Substrate

The process for detecting wear on a floor substrate including plurality of floor coatings is applicable to variety of floor substrates.

Examples of suitable floor substrates include cement, concrete, grout, brick, stone (such as marble, granite and limestone), clay, ceramic, polymer composite and combinations threof.

Preferably, the floor substrate of the present invention is selected from the group consisting of concrete, asphalt, cement, tile, grout, brick, ceramic, polymer composite, wood terrazzo, stone, vinyl composition flooring and combinations thereof.

Preferably, the floor substrate is concrete.

### UV Lamp

The process for detecting wear on a floor substrate including plurality of floor coatings is performed by irradiating the plurality of floor coatings including wear detection coating with Ultraviolet (UV) radiation energy source.

The sources of radiation which can be used in the wear detection process of present invention include any source that is capable of emitting ultra violet light, including, for example, hand held black light devices.

Preferably, the radiant energy absorbed by the plurality of floor coatings is generated from a UV lamp.

Preferably, the UV lamp is operated at 280-200 nm, more preferably 260-240 nm, most preferably 254 nm.

A commercially available UV light source, which can be used for the process of the invention is a "Blak-Ray" long wave UV lamp Model B100 (Ultraviolet Products, Inc.).

### Detecting Device

The radiation energy emitted by the plurality of floor coatings can be observed with the help of a detecting device as well.

Preferably, the radiant energy emitted by the wear detection coating is analyzed using a detecting device.

Examples of such devices and/or techniques include fluorescence spectrometer, x-ray fluorescence spectroscopy and emission spectroscopy.

### Application Areas

The process for detecting wear on a floor substrate including a plurality of floor coatings is applicable to floor substrates located in different type of structures or premises.

Preferably, the floor substrate is located in a structure selected from the group consisting of dwelling, garage, workshop, hospital, store, restaurant, school, office, and gymnasium. More preferably, the floor substrate is located in the workshop.

Preferably, the process for detecting wear on a floor substrate including plurality of floor coatings is applicable to floor substrates which are prone to friction and/or floor substrates which generate high amount of static charge. The floor coatings of the present invention may optionally comprise one or more additional layers and/or components. For instance a primer layer and/or a clear coat layer may be provided as one of the plurality of floor coatings. The additional layers can be of any suitable material, or more specifically a synthetic polymer, which is commonly used in the floor coatings and related applications.

The floor coatings of the present invention can be applied on a floor substrate by variety of application techniques. Some of the suitable techniques include rolling, wiping, moping, brushing, spraying, squeegeeing, soaking and combinations thereof.

In an exemplary embodiment of the present invention, a typical floor coating according to the invention may have the following structure (in the order of the topmost layer of the floor coatings to the floor substrate):
- a first layer of a two component epoxy resin;
- a second layer of wear detection coating comprising an optical brightener and two component epoxy resin;
- a primer layer on the floor substrate such as a concrete floor substrate; and
- a floor substrate, such as concrete.

In an another aspect of the invention, the present invention relates to a wear detection coating, for detecting wear on a floor substrate containing plurality of floor coatings, comprising
- a two component epoxy resin composition consisting of a resin component which comprises at least one epoxy resin and a hardener component which comprises at least one polyamine;
- an optical brightener in the concentration range of 0.1 to 0.5 percent based on total weight of the wear detection coating; and
- preferably a silicone based defoamer.

Preferably, the optical brightener is 2,5-Bis(benzoxazol-2-yl)thiophene.

Preferably, the epoxy resin is a liquid resin based on a bisphenol, particularly based on bisphenol A, bisphenol F or bisphenol A/F.

Preferably, the silicone based defoamer is particularly a polysiloxane based defoamer.

Still another aspect of the invention is the use on an optical brightener for detecting wear on a floor substrate containing a plurality of floor coatings, whereby one of the floor coatings comprising a two component epoxy resin composition consisting of a resin component which comprises at least one epoxy resin and a hardener component which comprises at least one polyamine, whereby the optical brightener is in a proportion of 0.1 to 0.5% by weight to the total weight of floor coating.

In the following section the above described invention is further discussed with the help of Figures.

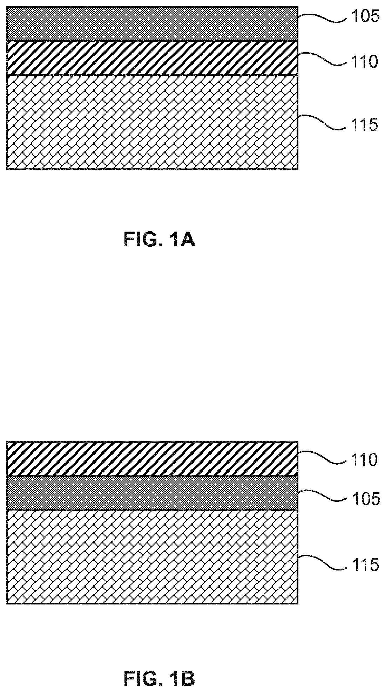

In Figure 1 the overall construction of the floor substrate containing plurality of floor coatings in accordance with preferred embodiments of the invention is shown.

Figure 1a and Figure 1b depicts the floor substrate 115 containing plurality of floor coatings, wherein the plurality of floor coatings contain a first layer which is the top most layer and a second layer, which is in contact with the first layer. The overall construction from top to bottom (or floor substrate) is in the order of a) first layer b) a second layer c) one or more additional coating layers, which are optional (Not shown in figures) and d) a floor substrate 115.

In Figure 1a, a specific embodiment of the present invention is depicted in which the wear detection coating 105 is the first layer (or top most layer). The wear detection coating 105 is in direct contact with the second layer, which is a floor coating 110 of the plurality of floor coatings. In this embodiment of the invention, the floor coating 1110 of the plurality of floor coatings is in contact with the floor substrate 115.

In this construction, the wear detection coating 105 is present as the top layer. On excitation of the floor coating with UV radiation, the top layer exhibit visible fluorescence. Thus, absence of any spot of visible fluorescence from the wear detection coating indicates that the floor coating is worn or the floor substrate contains defects.

In Figure 1b, a specific embodiment of the present invention is depicted in which the wear detection coating 105 is the second layer. The wear detection coating 105 is in direct contact with the first layer (or top most layer) which is a floor coating 110 of the plurality of floor coatings. In this embodiment of the invention, the wear detection coating 105 is in direct contact with the floor substrate 115.

In this construction, the wear detection coating 105 is present as the second layer. On excitation of the floor coating with UV radition the first layer (or top most layer) blocks the excitation radition from reaching the optical brightener present in the wear detection coating 105. Thus, when fluorescence is detected it is indicted that the floor coating is worn or the floor substrate contain defects.

Preferably, the wear detection coating 105 is the second layer of the plurality of floor coatings.

Preferably, the first layer and the second layer are of the same color.

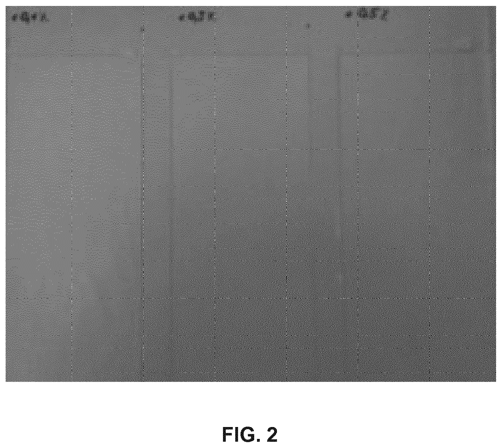

Fig. 2 depict photographic images of the experimental plates, with the different concentrations of optical brightener, without black light.

In the photographic images depicted in Fig.2, three experimental plates with different wear detection coatings are captured without exposure to black light (or without irradiation with black light). The wear detection coatings provided on the three plates differ in the concentration of the optical brightener present. The concentration is as set out in example 1 to 3 of the present description (i.e. 0.1%. 0.3 % and 0.5%).

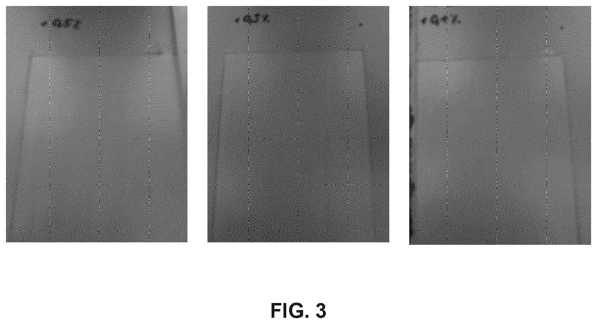

Fig. 3 depict photographic images of the experimental plates, with the different concentrations of optical brightener, viewed under black light lamp.

In the photographic images depicted in Fig.3, three experimental plates with different wear detection coatings are captured under exposure to black light (or with irradiation with black light). The wear detection coatings provided on the three plates differ in the concentration of the optical brightener present. The concentration is as set out in example 1 to 3 of the present description (i.e. 0.1%. 0.3 % and 0.5%). Wear can be detected in all of the examples in Fig. 3. However, concentrations of 0.3 % and 0.5%, especially 0.3 %, provide the best results.

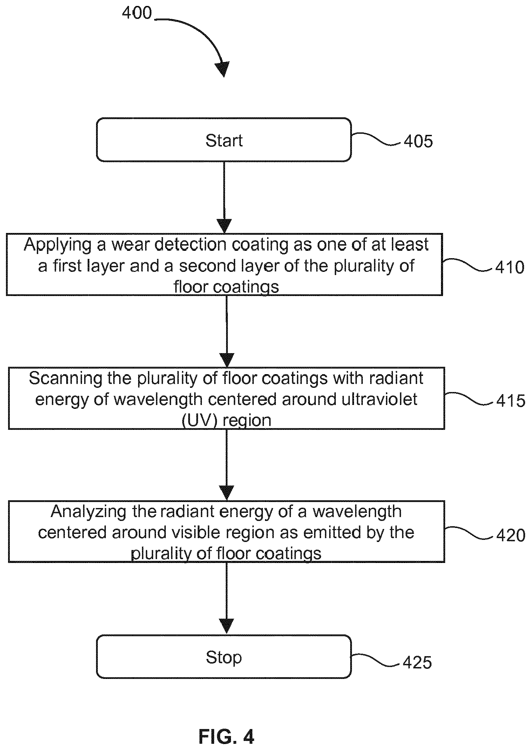

Fig. 4 is a flow chart for process for detecting wear on a floor substrate 115 including a plurality of floor coatings according to an exemplary embodiment of the present disclosure. The process 400 starts at step 405.

At step 410, a wear detection coating 105 is applied as one of at least a first layer of the plurality of floor coatings and a second layer of the plurality of floor coatings.

In an embodiment, the wear detection coating 105 is applied as a second layer on a floor substrate 115 including a plurality of floor coatings.

In an embodiment, the wear detection coating 105 is applied as a first layer on a floor substrate 115.

At step 415, the plurality of floor coatings are scanned (or irradiated) with radiant energy of wavelength centered around ultraviolet (UV) region.

At step 420, the radiant energy of a wavelength centered around visible region as emitted by the plurality of floor coatings is analyzed.

The process 400 ends at step 425.

### Examples

Set out below is an example which further illustrates the invention but are in no way intended to restrict the scope of the invention.

**Table 1 outlines the starting materials used for preparing the two-component water based epoxy-composition of the invention, indicating all proportions and percentage by weight:**

| | **Description** | **Wt.-%** |
|---|---|---|
| **Comp A (Resin Component)** | Liquid epoxy resin | 16 |
| | Emulsifier | 0.4 |
| | C12/C14-alkyl glycidyl ether | 1 |
| | Water | 10 |
| **Component B (Hardener Component)** | Epoxy curing agent (reaction product of a polyamine with a polyepoxide compound) | 15.000 |
| | Wetting and dispersing agent | 0.500 |
| | Defoamer | 0.040 |
| | Water | 19.000 |
| | Isophoronediamine as curing agent. | 0.500 |
| | Quartz flour | 17.000 |
| | Calcium Carbonate | 17.000 |
| | TiO2 | 5.000 |
| | Silicone-containing defoamer | 0.800 |
| | Wetting and levelling additive | 0.200 |

The above materials were mixed and stirred to give a coating solution.

Preferred commercial examples of the optical brightener used in the two-component water based epoxy-composition is the dispersion Uvitex EBF 250%.

Concentration of optical brightener used in two-component water based epoxy-composition, are shown below, indicating the amount of optical brightener used in coated area and its percentage by weight:

**Table 2**

| | Concentration of optical brightener in 2k aqueous EP coating (Comp. A + comp. B) Weight% | Amount of optical brightener in coated area (g / m²) |
|---|---|---|
| Example 1 | 0.5 | 1.5 |
| Example 2 | 0.3 | 0.9 |
| Example 3 | 0.1 | 0.3 |

### Preparation of the two-component water based epoxy-composition:

A resin component and a hardener component is prepared separately with the ingredients indicated in Table 1, in the indicated quantities (in parts by weight) (by mixing, if the component consisted of more than one ingredient), and subsequently the resin component is mixed with the hardener component in a centrifugal mixer.

### Preparation of the water based two-component epoxy-composition:

A resin component and a hardener component is prepared separately with the ingredients indicated in Table 1, in the indicated quantities (in parts by weight) (by mixing, if the component consisted of more than one ingredient), and subsequently the resin component is mixed with the hardener component in a centrifugal mixer to form a water based two-component epoxy-composition.

The curing of the described epoxy resin composition by chemical reaction starts with the mixing of the two components. During the curing of the described composition, substantially clear, glossy films form, which have excellent mechanical properties, such as high hardness, good scratch resistance and toughness, as well as good adhesion on substrates of a great variety.

### Preparation of the wear detection coating:

To prepare the wear detection coating of the present invention, an optical brightener is also added in the water based two-component epoxy-composition described above.

### Application Method:

Wear detection coating is applied on the floor substrate. The first layer is rolled on floor substrate without adding optical brightener and after drying at room temperature, second layer of wear detection coating with optical brightener is rolled on the floor substrate. Series of experiments are performed with different concentrations of the optical brightener as shown in table 2.

### Preparation Method

On a primed plate, a layer of the two-component water based epoxy-composition without optical brightener with a consumption of 300g / m² is rolled up. After 24 h drying at room temperature, the two-component water based epoxy-composition with optical brightener is rolled up with a consumption of 300g/m².

A series of experiments are performed by using the two-component water based epoxy-composition with different concentration of optical brightener as shown in table 3 below.

**Table 3**

| Concentration of optical brightener in two component aqueous Epoxy coating (Comp. A + comp. B) Weight% | Amount of optical brightener in coated area (g/m²) |
|---|---|
| 0.5 | 1.5 |
| 0.3 | 0.9 |
| 0.1 | 0.3 |

## Claims

1. A process for detecting wear on a floor substrate, the floor substrate including a plurality of floor coatings, the process comprising:
- applying a wear detection coating as one of at least a first layer of the plurality of floor coatings and a second layer of the plurality of floor coatings, wherein the wear detection coating comprises an optical brightener that absorbs radiant energy of wavelength centered around ultraviolet (UV) region and emits radiant energy of wavelength centered around visible region, and wherein the first layer is the topmost layer of the plurality of floor coatings and the second layer is adjacent to the first layer;
- scanning the plurality of floor coatings with radiant energy of wavelength centered around ultraviolet (UV) region; and
- analyzing radiant energy of wavelength centered around visible region as emitted by the plurality of floor coatings.

2. The process according to claim 1, **characterized in that** the optical brightener is added in a proportion of 0.1 to 0.5% by weight, preferably 0.2 to 0.4% by weight, of the total weight of the wear detection coating.

3. The process according to claim 1 or claim 2, **characterized in that** the optical brightener is a benzoxazole-based system, especially 4,4'-(E)-bis(benzoxazolyl)stilbene or a derivative thereof or a 2,5-bis(benzoxazol-2-yl)thiophene or a derivative thereof, preferably 2,5-bis(benzoxazol-2-yl)thiophene or a derivative thereof.

4. The process according to any of the proceeding claims, **characterized in that** each of the first layer of the plurality of floor coatings and the second layer of the plurality of floor coatings is of same color.

5. The process according to any of the proceeding claims, **characterized in that** the radiant energy absorbed by the plurality of floor coatings is generated from a UV lamp.

6. The process according to claim 5, **characterized in that** the UV lamp is operated at 280-200 nm, more preferably 260-240 nm, most preferably 254 nm.

7. The process according to any of the proceeding claims, **characterized in that** the radiant energy emitted by the wear detection coating is in visible range of electromagnetic spectrum.

8. The process according to any of the proceeding claims, **characterized in that** the floor substrate is selected from the group consisting of concrete, asphalt, cement, tile, grout, brick, ceramic, polymer composite, wood terrazzo, stone, vinyl composition flooring and combinations thereof.

9. The process according to any of the proceeding claims, **characterized in that** the wear detection coating comprises one or more polymer resin selected from the group consisting of an epoxy resin, a polyurethane resin and a polyurea resin.

10. The process according to any of the proceeding claims, **characterized in that** the wear detection coating is based on an epoxy resin, particularly a two-component epoxy resin composition.

11. The process according to any of the proceeding claims, **characterized in that** the radiant energy emitted by the wear detection coating is analyzed by using a detecting device.

12. A wear detection coating, for detecting wear on a floor substrate containing plurality of floor coatings, comprising
- a two component epoxy resin composition consisting of a resin component which comprises at least one epoxy resin and a hardener component which comprises at least one polyamine;
- an optical brightener in the concentration range of 0.1 to 0.5 percent based on total weight of the wear detection coating; and
- preferably a silicone based defoamer.

13. A wear detection coating according to claim 12, **characterized in that** the optical brightener is a benzoxazole-based system, especially 4,4'-(E)-bis(benzoxazolyl)stilbene or a derivative thereof or a 2,5-bis(benzoxazol-2-yl)thiophene or a derivative thereof, preferably 2,5-bis(benzoxazol-2-yl)thiophene or a derivative thereof.

14. A wear detection coating according to one of the claims 12 or 13, **characterized in that** the epoxy resin is a liquid resin based on a bisphenol, particularly based on bisphenol A, bisphenol F or bisphenol A/F.

15. Use on an optical brightener for detecting wear on a floor substrate containing a plurality of floor coatings, whereby one of the floor coatings comprising a two component epoxy resin composition consisting of a resin component which comprises at least one epoxy resin and a hardener component which comprises at least one polyamine, whereby the optical brightener is in a proportion of 0.1 to 0.5% by weight to the total weight of floor coating.
